# EUROPÄISCHE PATENTSCHRIFT

(11) **EP 1 560 764 B1**
(45) Veröffentlichungstag und Bekanntmachung des Hinweises auf die Patenterteilung: **17.10.2007**
(21) Anmeldenummer: 03810930.2
(22) Anmeldetag: 25.08.2003
(51) Int. Cl.: A01D 46/22

(54) **TRAGTASCHE FÜR EMPFINDLICHE WAREN MIT SCHONENDER ENTLEERUNG**
CARRIER BAG FOR CARRYING DELICATE GOODS AND ENABLING THESE GOODS TO BE REMOVED WITHOUT BEING DAMAGED
SAC A ANSE POUR ARTICLES DELICATS, PERMETTANT DE SORTIR LESDITS ARTICLES SANS LES ALTERER

(30) Priorität: 11.11.2002 CH 188402
(43) Veröffentlichungstag der Anmeldung: 10.08.2005
(73) Patentinhaber: Alber, Alfons, 39010 Vöran (IT); Kuhn, Günther, 39012 Meran (IT)
(72) Erfinder: Alber, Alfons, 39010 Vöran (IT); Kuhn, Günther, 39012 Meran (IT)
(74) Vertreter: Maiwald Patentanwalts GmbH
(86) Internationale Anmeldenummer: PCT/CH2003/000573
(87) Internationale Veröffentlichungsnummer: WO 2004/043807

(56) Entgegenhaltungen:
- WO-A-96/13969
- WO-A-97/14292
- FR-A- 1 377 401
- US-A- 1 738 470
- US-A- 5 201 446

## Beschreibung

Gegenstand der vorliegenden Erfindung ist eine Tragetasche, die gemäss den Patentansprüchen 1-10 gekennzeichnet ist.

Heutiger Stand: Tragetaschen, die zum Pflücken oder Auflesen von Früchten dienen, sind aus verformbarem Material, wodurch der Inhalt von aussen beschädigt werden kann, oder aus unverformbarem Material, das sich am Körper des Pflückers reibt. Die Entleerung der Tragetaschen erfolgt durch Auslegen der Tasche oder durch Öffnen des Bodens wie bei der Tasche, die in der US 5 201 446 A offenbart ist. Dadurch können diese nicht mit vollem Inhalt wegen Beschädigungsgefahr abgestellt werden.

Die Erfindung löst das Problem wie folgt: Die Grundidee der vorliegenden Erfindung liegt darin, eine Tragetasche zu haben, die körperseitig starr, jedoch am Körper ohne Ecken und Kanten anliegt. Des weiteren ist sie mit einer festen Bodenplatte ausgestattet und kann auch im befüllten Zustand abgestellt werden ohne den Inhalt zu beschädigen. Eine Tragetasche, die aus beweglichen Seitenteilen besteht, ohne dass der Inhalt von aussen beschädigt werden kann. Durch eine Trennwand in der Tragetasche können unterschiedliche Fruchtqualitäten oder Gegenstände gelegt werden, ohne dass sie sich gegenseitig berühren oder vermischen. Durch Minimum einer Entleerungsstelle an den Seitenteilen kann der Inhalt schonend und optisch kontrollierbar entleert werden.

Im vorliegenden Fall handelt es sich um eine Tragetasche, die aus verformbaren Teilen (1a), (1b), (1c), aus gepolsterten Teilen (2) und aus beweglichen Teilen (3), besteht. Die beweglichen Teile werden an den Ecken zusammengezogen und bilden eine Tasche. Die festen Teile (1a) und (1 b) sind an den Ecken mit flexiblen Elementen miteinander verbunden um ein Auslaufen des Inhalts zu verhindern. Die Tragetasche ist mit Minimum an einem Punkt (5) fix oder versetzbar mit dem Trägergurt (6) verbunden.

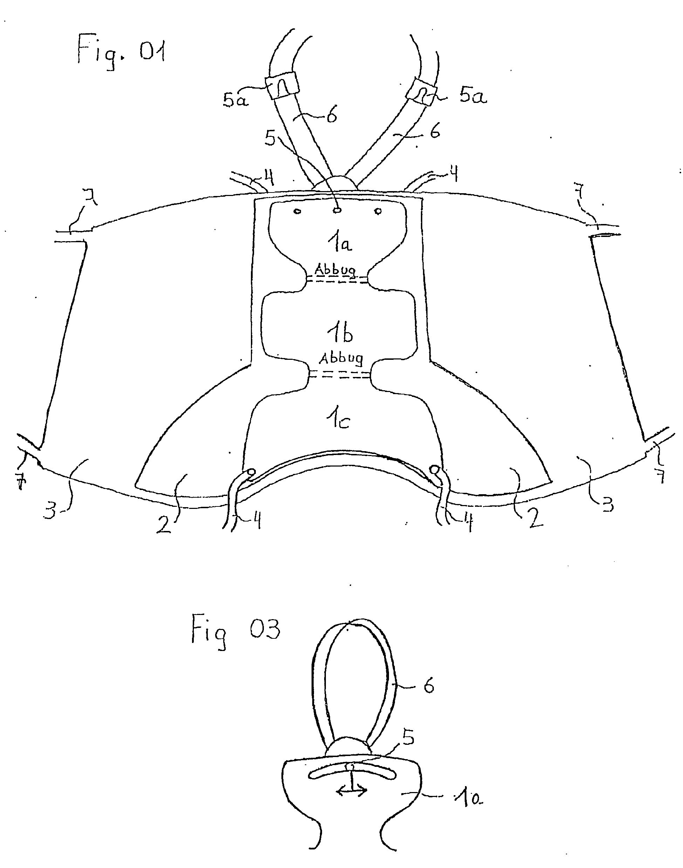

In den Zeichnungen sind Abbildungen von möglichen Tragetaschen
Fig.01: Tragetasche im ausgebreiteten Zustand aus unverformbaren Teilen (1a) bis (1 c), die zueinander biegsam sind, aus gepolsterten Teilen (2), aus beweglichen Teilen (3), verstellbarer Verbindung (5) mit den Trägergurten (6) und (7) mit (5a) verbunden. Die Tragetasche wird mit Punkt (5) und Punkt (7) am Trägergurt befestigt.

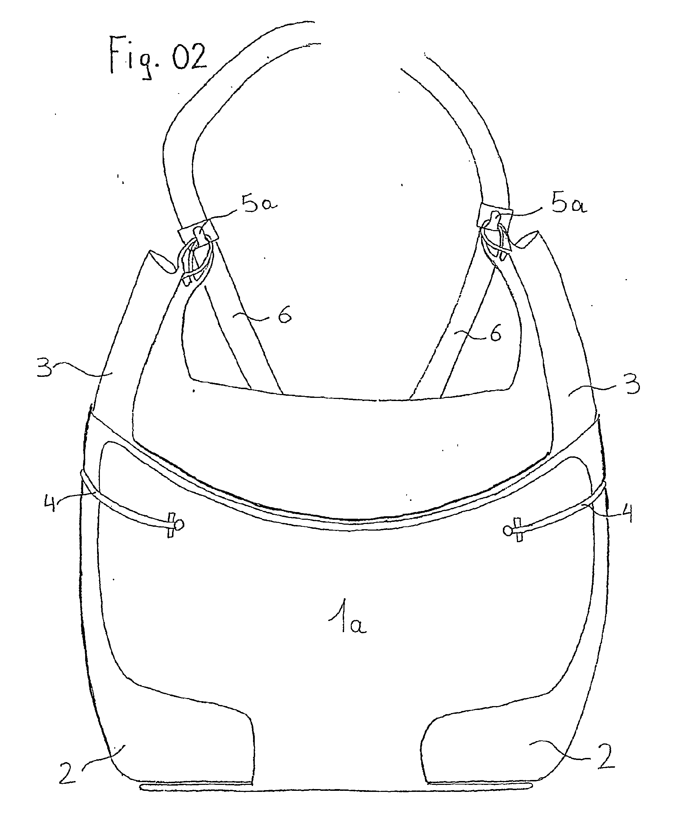

Fig.02: Tragetasche im geschlossenen Zustand, an den Ecken der unverformbaren Teile (1a) und (1c) mit flexiblen Elementen verbunden. Die beweglichen Seitenteile (3) sind mit dem Trägergurt (5a) verstellbar befestigt.
Fig.03: Körperpartie (1a) der Tragetasche verschiebbar (5) mit dem Trägergurt (6) verbunden.

## Patentansprüche

1. Tragetasche zur schonenden Entleerung von Inhalten, wobei die Tragetasche aufweist:
ein körperseitiges Element (1a);
eine Frontpartie (1c);
biegsame Elemente (3);
nachgiebig gepolsterte Wandelemente (2);
Befestigungselemente (7);
einen Trägergurt (6);
wobei die biegsamen Elemente (3) und die nachgiebig gepolsterten Wandelemente (2) hochziehbar sind;
wobei die Inhalte der Tragetasche mittels Bringens von mindestens einer der Seitenwände auf Ebene der Bodenplatte (1b) entleerbar sind **dadurch gekennzeichnet, dass** die Tragetasche eine Bodenplatte (1b) aufweist und dass die biegsamen Elemente (3) und die nachgiebig gepolsterten Wandelemente (2) durch Verbinden der Befestingungselemente (7) mit dem Trägergurt (6) zum Bilden von Seitenwanden hochziehbar sind.

2. Tragetasche nach Anspruch 1,
wobei das körperseitige Element (1a), die Bodenplatte(1b) und die Frontpartie (1c) starr ausgebildet sind und biegsam miteinander verbunden sind.

3. Tragetasche nach Anspruch 1 oder 2,
aufweisend eine Halterung (5), mittels welcher das körperseitige Element (1a) mit dem Trägergurt (6) verbunden ist.

4. Tragetasche nach einem der Ansprüche 1 bis 3,
wobei das körperseitige Element (1a), die Bodenplatte(1b) und die Frontpartie (1c) aus einer Gussform ausgebildet sind.

5. Tragetasche nach einem der Ansprüche 1 bis 4,
aufweisend Verbindungsmittel, die zum Verbinden der biegsamen Elemente (3) und der nachgiebig gepolsterten Wandelemente (2) mit dem fest ausgebildeten körperseitigen Element (1a), der fest ausgebildeten Bodenplatte(1b) und der fest ausgebildeten Frontpartie (1c) ausgebildet sind.

6. Tragetasche nach einem der Ansprüche 1 bis 5,
wobei das körperseitige Element (1a), die Bodenplatte(1b) und die Frontpartie (1c) starr ausgebildet sind und nach Zusammenziehen der seitlich angeordneten biegsamen Elemente (3) und der nachgiebig gepolsterten Wandelemente (2) eine Öffnung bilden.

7. Tragetasche nach einem der Ansprüche 1 bis 6,
wobei die biegsamen Elemente (3) und die nachgiebig gepolsterten Wandelemente (2) als einsetzbare und ausnehmbare Einlage aus vorgeformtem Werkstoff gebildet sind.

8. Tragetasche nach einem der Ansprüche 1 bis 7,
wobei Eckpunkte des körperseitigen Elements (1a) und der Frontpartie (1c) mit flexiblen Verbindungsmitteln (4) verbindbar sind, so dass die Tragetasche am Boden stehen bleibt, ohne dass der Inhalt sich entleert.

9. Tragetasche nach einem der Ansprüche I bis 8,
wobei das körperseitige Element (1a) fix oder verschiebbar mit dem Trägergurt (6) verbunden ist.

10. Tragetasche nach einem der Ansprüche 1 bis 9,
aufweisend eine Trennwand, wobei mittels der Trennwand die Tragetasche zwischen dem körperseitigen Element (1a) und der Frontpartie (1c) verbunden ist.

11. Tragetasche nach einem der Ansprüche 1 bis 10,
wobei mittels mindestens einer Entleerungsstelle an den Seitenwänden die Inhalte der Tragetasche entleerbar sind.

## Claims

1. Carrying bag for a damage preventing emptying of contents, wherein the carrying bag comprises:
a body-sided element (1a);
a front portion (1c);
bendable elements (3);
elastically padded wall elements (2);
fixing elements (7);
a carrying belt (6);
wherein the bendable elements (3) and the elastically padded wall elements (2) are liftable;
wherein the contents of the carrying back are emptied by means of a bringing at least one side wall to a level of the bottom plate (1b);
**characterized in that**:
the carrying bag comprises a bottom plate (1b);
and that the bendable elements (3) and the elastically padded wall elements (2) are lifted to built up side walls by means of a connecting the fixing elements (7) with the carrying belt (6).

2. Carrying bag according to claim 1, wherein
the body-sided element (1a), the bottom plate (1b) and the front portion (1c) are embodied rigidly, and are connected to each other in a bendable manner.

3. Carrying bag according to claim 1 or 2, comprising:
a holding element (5) connecting the body-sided element (1 a) with the carrier belt (6).

4. Carrying bag according to one of claims 1 to 3, wherein
the body-sided element (1a), the bottom plate (1b) and the front portion (1c) are manufactured out of a casting mold.

5. Carrying bag according to one of claims 1 to 4, comprising connecting means, which are adapted to connect the bendable elements (3) and the elastically padded wall elements (2) with the rigidly embodied body-sided element (1a), with the rigidly embodied bottom plate (1b) and with the rigidly embodied front portion (1c).

6. Carrying bag according to one of claims 1 to 5, wherein
the body-sided element (1a), the bottom plate (1b) and the front portion (1c) are embodied rigidly, and are adapted to form an opening by means of a constricting the side-positioned bendable elements (3) and the elastically padded wall elements (2).

7. Carrying bag according to one of claims 1 to 6, wherein
the bendable elements (3) and the elastically padded wall elements (2) are adapted as insert comprising of a preformed material, which insert can be inserted in or taken out of the carrying back

8. Carrying bag according to one of claims 1 to 7, wherein
the corner points of the body-sided element (1a) and of the front part (1c) are adapted to be connectable by means of flexible connecting elements (4) so that the carrying bag remains staying on the ground without the content being emptied.

9. Carrying bag according to one of claims 1 to 8, wherein
the body-sided element (1a) is fixedly or movably connected to the carrying belt.

10. Carrying bag according to one of claims 1 to 9, comprising a separating wall,
wherein the carrying bag is connected between the body-sided element (1a) and the front portion (1c) by means of the separation wall.

11. Carrying bag according to one of claims 1 to 10, wherein the contents of the carrying bag can be emptied by means of at least one emptying area on the side walls.

## Revendications

1. Sac de transport pour déverser délicatement des contenus, le sac à comportant :
un élément du côté corps (1a) ;
une partie frontale (1c) ;
des éléments flexibles (3) ;
des éléments de paroi (2) capitonnés de manière souple ;
des éléments de fixation (7) ;
une sangle de transport (6) ;
dans lequel les éléments flexibles (3) et les éléments de paroi (2) capitonnés de manière souple peuvent être tirés vers le haut ;
dans lequel les contenus du sac de transport peuvent être déversés en amenant au moins l'une des parois latérales au niveau de la plaque de fond (1b) ;
**caractérisé en ce que** le sac de transport comporte une plaque de fond (1b) et que les éléments flexibles (3) et les éléments de parois (2) capitonnés de manière souple peuvent être tirés vers le haut en reliant les éléments de fixation (7) avec la sangle de transport (6) pour former des parois latérales.

2. Sac de transport selon la revendication 1,
dans lequel l'élément du côté corps (1a), la plaque de fond (1b) et la partie frontale (1c) sont réalisés rigides et reliés de manière flexibles les uns avec les autres.

3. Sac de transport selon la revendication 1 ou 2,
comportant une fixation (5), au moyen de laquelle l'élément du côté corps (1a) est relié à la sangle de transport (6).

4. Sac de transport selon l'une des revendications 1 à 3,
dans lequel l'élément du côté corps (1a), la plaque de fond (1b) et la partie frontale (1c) sont réalisés dans une forme moulée.

5. Sac de transport selon l'une des revendications 1 à 4,
comportant des moyens de liaison qui sont réalisés pour relier les éléments flexibles (3) et les éléments de paroi (2) capitonnés de manière souple avec l'élément du côté corps (1a) réalisé rigide, la plaque de fond (1b) réalisée rigide et la partie frontale (1c) réalisée rigide.

6. Sac de transport selon l'une des revendications 1 à 5,
dans lequel l'élément du côté corps (1a), la plaque de fond (1b) et la partie frontale (1c) sont réalisés rigides et forment une ouverture après resserrage des éléments flexibles (3) disposés latéralement conjointement avec les éléments de paroi (2) capitonnés de manière souple.

7. Sac de transport selon l'une des revendications 1 à 6,
dans lequel les éléments flexibles (3) et les éléments de paroi (2) capitonnés de manière souple sont réalisés sous forme d'inserts en matériau préformé, pouvant être insérés et retirés.

8. Sac de transport selon l'une des revendications 1 à 7,
dans lequel des coins de l'élément du côté corps (1a) et de la partie frontale (1c) peuvent être reliés avec des moyens de liaison souples (4), de sorte que le sac de transport peut être posé debout sur le sol, sans que le contenu ne se déverse.

9. Sac de transport selon l'une des revendications 1 à 8,
dans lequel l'élément du côté corps (1a) est relié de manière fixe ou coulissante à la sangle de transport (6).

10. Sac de transport selon l'une des revendications 1 à 9,
comportant une cloison de séparation, le sac de transport étant relié au moyen de la cloison de séparation entre l'élément du côté corps (1a) et la partie frontale (1c).

11. Sac de transport selon l'une des revendications 1 à 10,
dans lequel les contenus du sac de transport peuvent être vidés au moyen d'au moins un point de déversement situé sur les parois latérales.
